(19) Europäisches Patentamt
European Patent Office
Office européen des brevets

(11) **EP 2 855 876 B1**

(12) **FASCICULE DE BREVET EUROPEEN**

(45) Date de publication et mention de la délivrance du brevet:
**03.07.2019 Bulletin 2019/27**

(21) Numéro de dépôt: **13727263.9**

(22) Date de dépôt: **06.05.2013**

(51) Int Cl.:
**F02C 6/08** *(2006.01)*    **F02C 9/18** *(2006.01)*

(86) Numéro de dépôt international:
**PCT/FR2013/051006**

(87) Numéro de publication internationale:
**WO 2013/167836 (14.11.2013 Gazette 2013/46)**

(54) **PROCEDE DE MONTAGE AMELIORE D'UN VERIN DE COMMANDE D'UNE VANNE DE DECHARGE D'AIR D'UNE TURBOMACHINE**

VERFAHREN ZUR VERBESSERTEN MONTAGE EINES AKTUATORS FÜR EIN LUFTAUSLASSVENTIL EINES TURBINENMOTORS

METHOD FOR IMPROVED ASSEMBLY OF AN ACTUATOR FOR AN AIR BLEED VALVE OF A TURBINE ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.05.2012 FR 1254175**

(43) Date de publication de la demande:
**08.04.2015 Bulletin 2015/15**

(73) Titulaire: **Safran Aircraft Engines**
**75015 Paris (FR)**

(72) Inventeur: **CHAUVEL, Sylvain**
**F-77550 Moissy-Cramayel Cedex (FR)**

(74) Mandataire: **Brevalex**
**95, rue d'Amsterdam**
**75378 Paris Cedex 8 (FR)**

(56) Documents cités:
**EP-A1- 2 034 134        WO-A2-2007/116319**
**US-A- 4 765 131          US-A- 4 785 624**
**US-A1- 2008 131 266**

# Description

## DOMAINE TECHNIQUE

La présente invention concerne le domaine des vérins de commande des vannes de décharge d'air placées entre un compresseur basse pression et un compresseur haute pression d'une turbomachine, de préférence une turbomachine d'aéronef.

Ces vannes de décharge, parfois désignées par leur acronyme anglais *VBV (Variable Bleed Valves)*, sont en effet prévues pour être actionnées dans certaines circonstances afin de permettre à une partie de l'air de la veine de passer du flux primaire au flux secondaire, notamment pour éviter le phénomène de pompage. En d'autres termes, ces vannes sont destinées à réguler le débit en entrée du compresseur haute pression afin notamment de limiter les risques de pompage du compresseur basse pression en permettant l'évacuation d'une partie de l'air hors de l'espace annulaire d'écoulement du flux primaire. De plus, en cas de pénétration accidentelle dans cet espace d'écoulement, d'eau, notamment sous forme de pluie ou de grêle, ou encore de débris divers, qui sont susceptibles de nuire au fonctionnement du turboréacteur, ces vannes permettent de récupérer cette eau ou ces débris qui sont centrifugés dans l'espace d'écoulement précité et de les éjecter vers l'extérieur de ce dernier. Dans le cas des turboréacteurs à double flux, ces vannes peuvent ainsi être configurées pour permettre le passage des fragments ou débris de l'espace d'écoulement du flux primaire vers un espace annulaire d'écoulement d'un flux secondaire.

L'invention se rapporte plus précisément au procédé de montage d'un vérin de commande de telles vannes de décharge, sur une paroi de carter, en particulier lorsque les conditions d'accès offertes à l'opérateur sont restreintes.

## ÉTAT DE LA TECHNIQUE ANTÉRIEURE

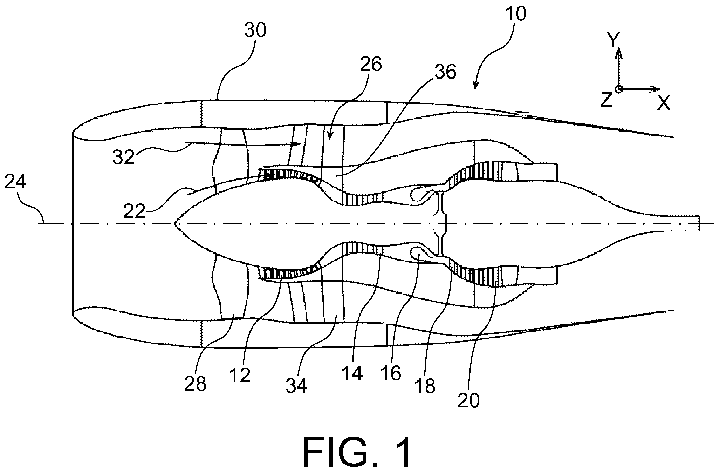

Comme l'illustre la figure 1 qui est une vue schématique en coupe axiale d'un turboréacteur à double corps 10, un tel turboréacteur comporte en général, de l'amont vers l'aval selon la direction d'écoulement des gaz, un compresseur basse pression 12, un compresseur haute pression 14, une chambre de combustion 16, une turbine haute pression 18 et une turbine basse pression 20, qui définissent un flux primaire de gaz 22. La turbine haute pression 18 est solidaire du compresseur haute pression 14 de manière à former un corps haute pression, tandis que la turbine basse pression 20 est solidaire du compresseur basse pression 12 de manière à former un corps basse pression, de sorte que chaque turbine entraîne le compresseur associé en rotation autour d'un axe de turboréacteur 24 sous l'effet de la poussée des gaz provenant de la chambre de combustion 16.

Un carter intermédiaire 26 est habituellement interposé entre les compresseurs basse pression 12 et haute pression 14.

Dans le cas des turboréacteurs à double flux, qui comprennent une soufflante 28 carénée par une nacelle 30 pour générer un flux secondaire 32, le carter intermédiaire 26 comporte en général des bras 34 traversant l'espace d'écoulement de ce flux secondaire 32. Ces bras, généralement au nombre de quatre et répartis à 90°, définissent entre eux des espaces dans lesquels sont agencés des aubages directeurs de sortie (non représentés), également dits OGV (de l'acronyme anglais « Outlet Guide Vane »).

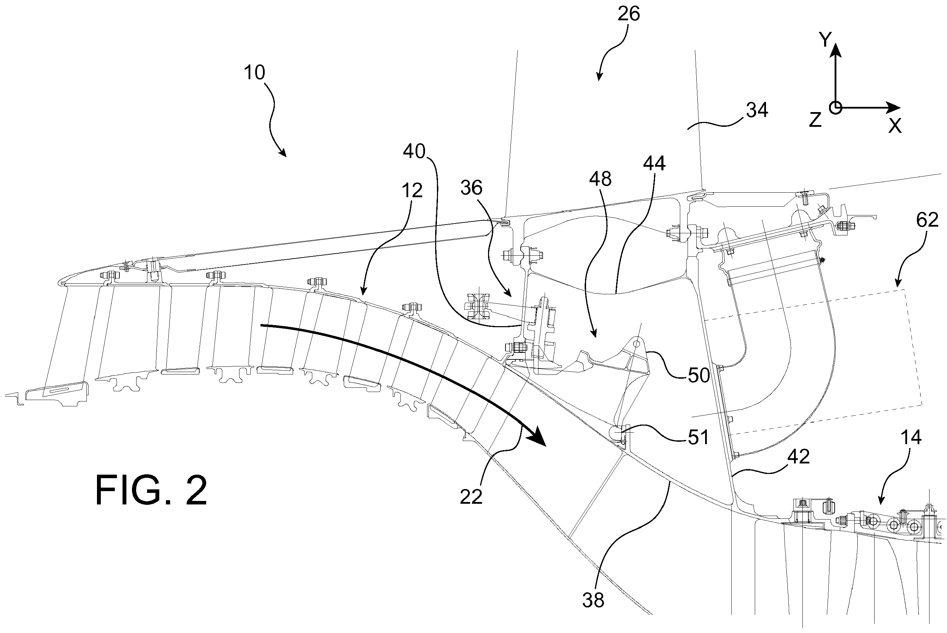

La figure 2 illustre à plus grande échelle le moyeu 36 du carter intermédiaire 26 d'un turboréacteur de type connu analogue à celui décrit ci-dessus.

Ce moyeu 36 comporte une virole interne 38 délimitant l'espace d'écoulement du flux primaire 22, une joue amont 40 et une joue aval 42 raccordées à la virole interne 38 précitée, ainsi qu'une virole externe 44 reliant lesdites joues 40, 42.

Le moyeu 36 supporte des bras 34 de carter intermédiaire fixés aux extrémités radialement externes des joues 40 et 42. Il porte également les aubages directeurs de sortie.

Par ailleurs, ce moyeu 36 est équipé d'une rangée annulaire de vannes de décharge 48, dont l'une est visible en coupe sur la figure 2. Sur cette figure apparaît plus spécifiquement la porte 50 de la vanne 48, qui est montée pivotante autour d'un axe 51, de manière à être déplaçable entre une position d'ouverture et une position de fermeture d'un orifice correspondant formé dans la virole interne 38 du moyeu 36.

Pour la commande des vannes de décharge 48, il est prévu des vérins de commande 62, habituellement deux disposés à 180°, ainsi qu'un mécanisme de transmission (non représenté sur la figure 2) interposé entre ces vérins et les vannes de décharge. Ces mécanismes de transmission sont habituellement du type à anneau de commande, ou à câbles de torsion.

Dans cette réalisation, les deux vérins sont montés sur la joue aval 42, mais peuvent alternativement être montés sur toute paroi de carter, de préférence située à proximité des vannes de décharge qu'ils commandent.

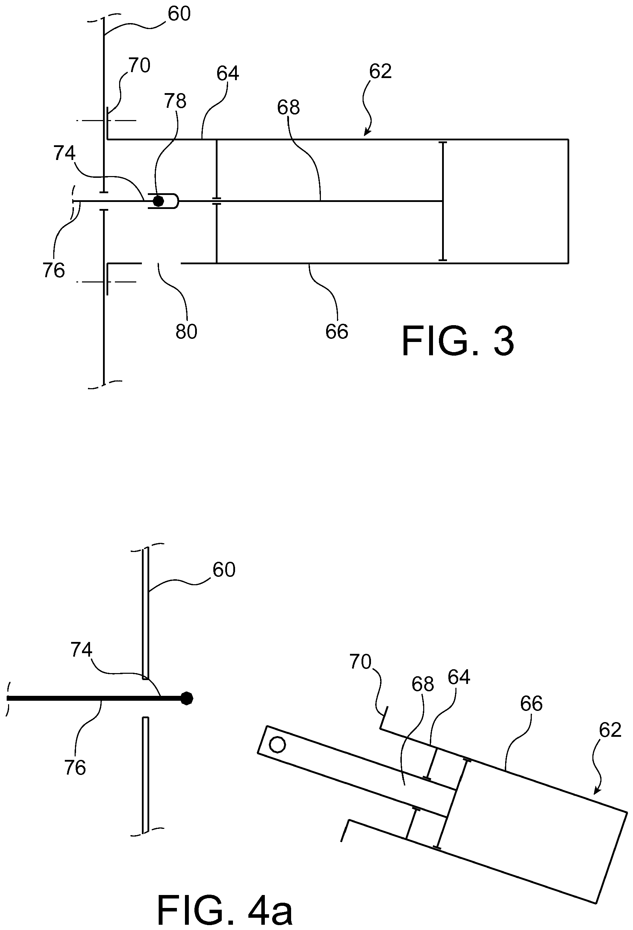

La figure 3 montre un exemple de montage du vérin de commande 62 sur une paroi de carter 60, qui correspond donc ici à la joue aval précitée. Dans cet exemple, le vérin 62 est fixé sur la paroi de carter 60 à l'aide d'une entretoise 64 prolongeant le cylindre 66 du vérin. L'entretoise dispose alors d'un diamètre sensiblement identique à celui du cylindre, et se prolonge à partir de l'extrémité du cylindre de laquelle la tige de piston 68 fait saillie. D'ailleurs, l'entretoise 64 entoure l'extrémité extérieure de la tige de piston 68, c'est-à-dire celle opposée à l'extrémité portant le piston.

L'entretoise 64 présente une extrémité aval solidaire du cylindre, par exemple rapportée par vissage. Elle s'étend ensuite vers l'amont pour se terminer par une collerette 70 d'appui sur la surface aval de la paroi 60. C'est cette collerette 70 qui est montée par vissage sur la paroi de carter 60, par exemple à l'aide de vis et d'inserts.

La conception de cet exemple de réalisation de l'art antérieur a essentiellement été dictée par les difficultés d'accès pour l'opérateur, qui, ici, ne peut intervenir que du côté aval de la paroi 60, c'est-à-dire du côté de la zone dite « zone core » située en aval de la zone de soufflante, de laquelle elle est séparée par le carter intermédiaire.

Ainsi, il est prévu que le mécanisme de transmission comporte une extrémité 74 placée en saillie de la paroi 60, vers l'aval. Cette extrémité 74 fait par exemple partie intégrante d'une biellette de sortie 76 traversant une ouverture de la paroi 60, cette biellette 76 étant habituellement prévue pour être actionnée par le vérin dans le but d'amener les vannes de décharge de la position d'ouverture à la position de fermeture, et inversement.

L'extrémité 74 est raccordée à l'extrémité libre de la tige de piston 68, comme cela est visible sur la figure 3. La jonction mécanique 78 entre la tige de piston 68 et l'extrémité 74, par exemple du type liaison rotulée, est alors située à l'intérieur de l'entretoise 64, munie d'une ou plusieurs ouvertures latérales 80 permettant le passage des doigts de l'opérateur pour accéder à la jonction 78.

Pour le montage du vérin 62, l'entretoise 64 est d'abord fixée sur la surface aval de la paroi, avec la tige de piston en position rentrée. L'opérateur, qui n'a ici accès que depuis la zone core, passe ensuite ses doigts à travers les ouvertures latérales 80 situées en regard de l'extrémité 74 et de l'extrémité de tige de piston, afin de les relier pour former la jonction mécanique 78. Pour le démontage du vérin effectué notamment lors des phases de maintenance, les opérations mentionnées ci-dessus sont mises en oeuvre dans l'ordre inverse.

Les ouvertures doivent ainsi présenter une longueur suffisante pour permettre le passage des doigts de l'opérateur. Cela conduit à prévoir une longueur importante pour l'entretoise, qui s'accompagne nécessairement d'une masse élevée. Ce problème est d'autant plus contraignant que pour assurer la fonction anti-feu décrite ci-dessous, l'entretoise est généralement réalisée en acier, et peut constituer jusqu'à plus de la moitié de la masse globale du vérin. Le surcroit de longueur du vérin de commande dû à l'entretoise de fixation crée par ailleurs des contraintes d'installation ainsi que des amplifications de vibrations. Le coût est également impacté, puisque l'entretoise doit subir des usinages pour la formation de ces ouvertures.

De plus, il est noté que les ouvertures latérales de l'entretoise sont fermées lors du fonctionnement de la turbomachine, par exemple par des tôles amovibles appropriées. Cela s'explique par le besoin de disposer d'une entretoise présentant une fonction anti-feu sur toute sa longueur. En particulier, cette barrière anti-feu est prévue pour éviter qu'un feu se déclarant dans la zone core ne se propage dans la zone de soufflante en passant par l'intérieur de l'entretoise.

Bien entendu, la fonction anti-feu complexifie la conception de ces tôles, car elle nécessite des technologies coûteuses dues notamment aux faibles tolérances de fabrication admises et aux contraintes de maintenance, en particulier la possibilité de monter et de démonter le vérin en une durée restreinte, par exemple de l'ordre de quinze minutes.

Document WO2007116319 divulgue un vérin de commande de Turbomachine selon le préambule de la revendication 1.

**EXPOSÉ DE L'INVENTION**

L'invention a pour but de remédier au moins partiellement aux inconvénients précités, relatifs aux réalisations de l'art antérieur.

Pour ce faire, l'invention a pour objet un procédé de montage d'un vérin de commande d'au moins une vanne de décharge d'air placée entre un compresseur basse pression et un compresseur haute pression d'une turbomachine selon la revendication 1.

L'invention apporte une solution simple, peu coûteuse et de faible masse, notamment grâce à la possibilité de supprimer les ouvertures latérales de l'entretoise pratiquées dans l'art antérieur.

En effet, les ouvertures latérales n'étant plus nécessaires, même lorsque l'opérateur dispose d'un accès restreint, la longueur globale de l'entretoise peut être réduite. Il en découle un gain de masse et de coût, ce dernier étant également diminué grâce à l'absence des tôles d'obturation des ouvertures, qui rend par ailleurs plus aisée l'obtention de la fonction anti-feu au niveau de l'entretoise de fixation du vérin de commande.

L'étape de rentrée de la tige de piston est mise en oeuvre de sorte que la jonction mécanique entre la tige de piston et l'extrémité du mécanisme de transmission se situe, à la fin de cette étape, à l'intérieur de ladite entretoise.

Néanmoins, en particulier en fonction du moyen utilisé pour rentrer la tige, il se peut que la jonction mécanique ne soit plus à l'intérieur de l'entretoise à la fin de cette étape. A titre d'exemple, cette étape est réalisée soit en utilisant une pompe pour actionner le vérin et provoquer la rentrée de sa tige, soit le cylindre de vérin est poussé, par exemple manuellement, ce qui peut éventuellement conduire à modifier la cinématique et déplacer la jonction mécanique en dehors de l'entretoise. A cet égard, il est indiqué que le fait de retrouver la jonction mécanique dans l'entretoise à la fin de cette étape spécifique n'est pas une nécessité, car au démarrage moteur, la position de la tige de vérin est régulée par le calculateur grâce aux capteurs de position, et ramène automatiquement cette jonction mécanique à la position souhaitée par le calculateur, par exemple à l'intérieur de l'entretoise.

De préférence, l'étape de fixation de l'entretoise sur la paroi de carter s'effectue par vissage, par exemple à l'aide d'inserts équipant la paroi de carter, et de vis insérées et vissées depuis le côté où se trouve le vérin de commande, c'est-à-dire en « zone core ».

De préférence, l'étape de sortie de la tige de piston est réalisée de sorte que dans une position du vérin permettant le raccordement de sa tige de piston sur l'extrémité du mécanisme de transmission, la paroi de carter et l'entretoise définissent entre elles un accès permettant le passage des doigts d'un opérateur.

L'entretoise est fabriquée de manière à ne présenter aucune ouverture latérale. Elle est rapportée fixement sur le cylindre du vérin, ou bien alternativement fabriquée d'une seule pièce avec ce cylindre.

De préférence, l'étape de raccordement de la tige de piston en saillie à l'extrémité du mécanisme de transmission s'effectue à l'aide d'une liaison rotulée ou d'une liaison articulée. Il est par exemple prévu de placer un axe entre ces deux éléments à raccorder pour obtenir la liaison rotulée / articulée. Le procédé spécifique à la présente invention se révèle alors particulièrement bien adapté pour assurer le montage de ce type de liaison, nécessitant l'intervention de l'opérateur au plus près des deux éléments à raccorder.

Une telle liaison permet notamment d'autoriser un mouvement non linéaire de l'extrémité du mécanisme de transmission. Cela est notamment le cas lorsque la bielle du mécanisme portant cette extrémité est destinée à décrire une trajectoire complexe, avec par exemple au moins une composante en arc de cercle.

Le procédé comprend une étape préalable de dimensionnement du vérin, respectant la condition suivante :

$$(C-M)/2 = Y ;$$

avec « C » correspondant à la course maximale théorique du piston ;

« M » correspondant à la marge de butée mécanique en position rentrée de la tige ;

« Y » correspondant à la distance entre la paroi et le centre de la jonction mécanique entre la tige de piston et l'extrémité, avec le centre de la jonction mécanique agencé dans l'entretoise fixée sur la paroi, et amenant d'une part chaque vanne en position de fermeture et amenant d'autre part la tige de piston en position rentrée.

Ce dimensionnement est particulièrement optimal pour permettre un accès satisfaisant à l'opérateur, tout en présentant un encombrement global réduit. Néanmoins, d'autres valeurs sont possibles pour Y, le but étant en particulier d'éloigner suffisamment la jonction mécanique de la paroi pour permettre une manipulation aisée à l'opérateur assurant le raccordement.

De préférence, la distance « C-M » est environ égale à 40mm. Cette distance « C-M » correspond également de préférence à l'accès permettant le passage des doigts d'un opérateur, lorsque la tige de piston est placée en position de sortie.

L'invention a également pour objet un vérin de commande d'au moins une vanne de décharge d'air destinée à être placée entre un compresseur basse pression et un compresseur haute pression d'une turbomachine, ledit vérin comprenant d'une part un cylindre prolongé par une entretoise servant à la fixation du vérin sur une paroi de carter de la turbomachine, et comportant d'autre part une tige de piston entourée par ladite entretoise et destinée à être raccordée à une extrémité d'un mécanisme de transmission. Selon l'invention, ladite entretoise est dépourvue d'ouvertures latérales. En d'autres termes, elle est réalisée d'une seule pièce, en étant pleine et continue sur 360°. Cela lui permet notamment d'assurer une fonction anti-feu très satisfaisante.

D'autres avantages et caractéristiques de l'invention apparaîtront dans la description détaillée non limitative ci-dessous.

**BRÈVE DESCRIPTION DES DESSINS**

L'invention sera mieux comprise, et d'autres détails, avantages et caractéristiques de celle-ci apparaîtront à la lecture de la description suivante faite à titre d'exemple non limitatif et en référence aux dessins annexés dans lesquels :

- la figure 1, déjà décrite, est une vue schématique en coupe axiale d'un turboréacteur d'avion à double corps et à double flux d'un type connu ;
- la figure 2, déjà décrite, est une vue schématique partielle en coupe axiale et à plus grande échelle d'un turboréacteur de type connu sensiblement de même type que celui de la figure 1 ;
- la figure 3, déjà décrite, est une vue schématique en coupe du montage d'un vérin de commande de vannes de décharge, sur une paroi de carter;
- les figures 4a à 4d représentent différentes étapes successives du montage d'un vérin de commande de vannes de décharge, selon un mode de réalisation préféré de l'invention ; et
- les figures 5 et 6 sont des vues schématiques illustrant le dimensionnement du vérin de commande.

**EXPOSÉ DÉTAILLÉ DE MODES DE RÉALISATION PREFERES**

Un mode de réalisation préféré du procédé de montage selon l'invention est représenté sur les figures 4a à 4d. Il vise à monter, sur la paroi de carter 60, le vérin 62 commandant les vannes de décharge VBV 48, par l'intermédiaire du mécanisme de transmission. Pour la mise en oeuvre de l'invention, les éléments décrits en référence aux figures 1 à 3 restent identiques ou similaires, à l'exception de l'entretoise 64 qui est dépourvue d'ouvertures latérales. Elle présente donc une paroi latérale entièrement pleine s'étendant entre sa collerette amont 70 et son extrémité aval solidaire du cylindre 66 du vérin. Aussi, sur les figures, les éléments portant des références numériques identiques correspondent à des éléments identiques ou similaires.

Ici aussi, l'entretoise 64 peut être rapportée fixement sur le cylindre 66 du vérin, ou bien réalisée d'une seule pièce avec ce dernier. Dans le premier cas, l'acier sera préférentiellement retenu, alors que dans le second cas, ce s'agira plutôt de l'aluminium ou l'un de ses alliages.

Pour la mise en oeuvre du procédé, il est tout d'abord fait en sorte que l'extrémité 74 de la biellette 76 soit en saillie vis-à-vis de la paroi 60, vers l'aval, à savoir du côté où doit être monté le vérin. La distance de saillie doit être telle qu'elle permette ensuite la manipulation par l'opérateur, comme cela sera décrit ci-après. Cette position de la biellette 76 peut correspondre à toute position de sa course selon son axe, aux extrémités de laquelle elle place les vannes VBV respectivement en position d'ouverture et en position de fermeture. Néanmoins, préférentiellement, cette position de la figure 4a est proche ou identique à celle plaçant les vannes VBV en position de fermeture.

Parallèlement, il est procédé à la sortie de la tige de piston 68, de manière à ce qu'elle fasse saillie de l'entretoise 64 également sur une distance appropriée de manière à permettre ensuite la manipulation de l'extrémité de la tige par l'opérateur, comme cela sera décrit ci-après. Cette sortie de la tige de piston 68 est également schématisée sur la figure 4a.

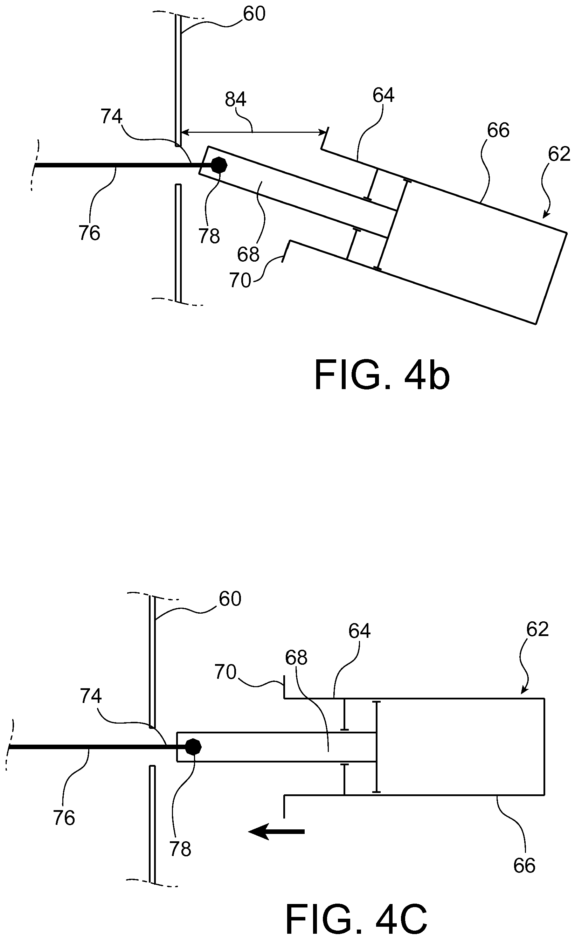

Ensuite, le vérin avec sa tige sortie est approché de l'extrémité 74, comme montré sur la figure 4b. Dans cette position rapprochée du vérin 62 permettant le raccordement de sa tige 68 sur l'extrémité 74, la paroi de carter 60 et la collerette 70 de l'entretoise définissent entre elles un accès 84 permettant le passage des doigts d'un opérateur. Typiquement, cet accès présente une longueur axiale de l'ordre de la valeur de la course du vérin, par exemple environ 40 mm. Cet accès 84 peut être augmenté en inclinant l'axe du vérin 62 par rapport à l'axe de la biellette 76, comme cela a été schématisé sur la figure 4b. L'accès 84 est alors défini par la partie de l'ouverture la plus étendue entre les éléments 60 et 70, ici la partie radialement extérieure, la plus accessible à l'opérateur depuis l'extérieur du turboréacteur.

Le raccordement de la tige de piston 68 à l'extrémité 74 du mécanisme de transmission peut alors s'effectuer via cet accès 84, à l'aide de moyens conventionnels conduisant à l'obtention de la jonction mécanique 78, par exemple du type liaison rotulée.

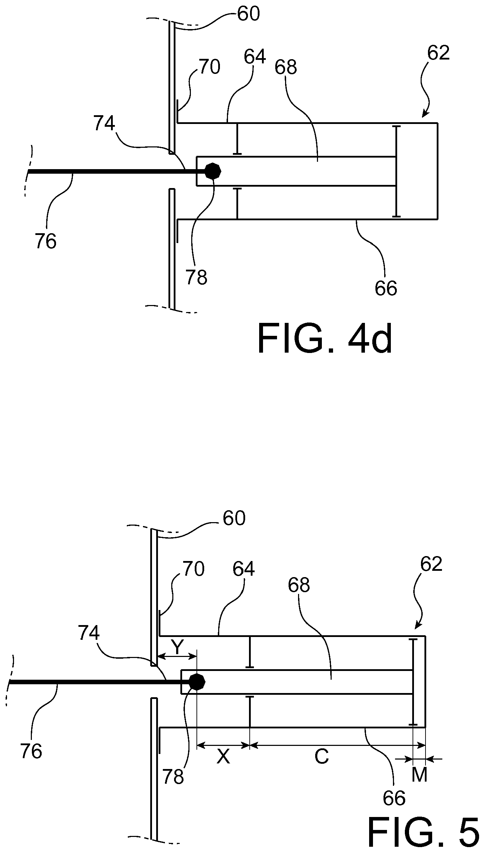

Une fois la jonction mécanique obtenue, il est procédé à la rentrée partielle ou totale de la tige de piston 68 de manière à rapprocher le cylindre 66 de la paroi 60, comme schématisé sur la figure 4c. Cette rentrée s'effectue de préférence en déplaçant le cylindre 66 sans déplacer la tige 68 relativement à la paroi 60, après avoir réaligné la biellette 76 et la tige 68. Elle est mise en oeuvre manuellement ou à l'aide d'un outillage approprié, de préférence une pompe ou similaire. Durant cette rentrée de la tige de piston 68, celle-ci ainsi que la biellette 76 restent donc de préférence sensiblement statiques vis-à-vis de la paroi 60. La rentrée est achevée lorsque la collerette 70 arrive en appui contre la surface aval de cette paroi 60, comme cela est montré sur la figure 4d. A ce stade, la jonction mécanique 78 se trouve alors à l'intérieur de l'entretoise 64, au sein de laquelle elle peut rester confinée lors de la course de la biellette visant au passage de la position d'ouverture des vannes VBV à leur position de fermeture, et inversement. Alternativement, lors de cette course, la jonction 78 peut traverser l'ouverture de la paroi 60, et donc passer de l'autre côté de celle-ci.

Il peut ensuite être réalisé la fixation de la collerette 70 sur la paroi 60, par exemple par assemblage de vis sur des inserts (non représentés) équipant cette paroi, ce vissage s'effectuant depuis le côté aval où se trouve le vérin. Au final, le vérin 62 est donc encastré dans la paroi de carter 60, en porte-à-faux.

L'invention permet donc un montage aisé du vérin même avec un accès restreint à l'opérateur, notamment limité au seul côté aval de la paroi 60.

Pour le démontage du vérin 62 effectué lors des phases de maintenance, les opérations mentionnées ci-dessus sont mises en oeuvre dans l'ordre inverse.

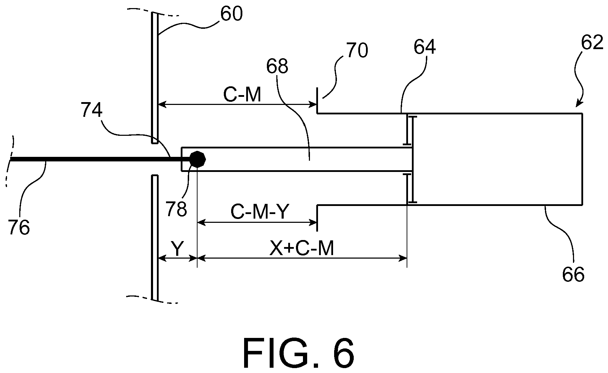

En référence à présent aux figures 5 et 6, il est illustré un exemple de réalisation du vérin de commande 62 monté sur la paroi de carter 60, avec plusieurs critères de dimensionnement préférés.

Sur la figure 5, la configuration est celle plaçant les vannes de décharge VBV 48 en position de fermeture. La tige de piston 68 se trouve alors rentrée en position de butée régulée. Seule une marge « M » est alors observée entre le piston 68 et la butée mécanique formée par le fond du cylindre. Dans cette configuration, la distance « Y » est définie entre la paroi 60 et le centre de la jonction mécanique 78, selon la direction de la biellette 76 et de la tige de piston 68. La distance « X » est quant à elle définie entre le centre de la jonction mécanique 78 et l'extrémité du cylindre 66, toujours selon la même direction. Enfin, la distance « C » correspond à la course maximale théorique du piston, à savoir à la distance séparant les deux fonds du cylindre 66.

Aussi, la longueur de l'entretoise 64 correspond à la somme des valeurs X et Y. La longueur C-M, référencée sur la figure 6, correspond ici sensiblement à l'accès 84, sans tenir compte d'une éventuelle inclinaison du vérin 62. Cette longueur est donc préférentiellement suffisante pour laisser passer les doigts d'un opérateur. Enfin, bien que cela ne ressorte pas des figures, il est préférentiellement fait en sorte que la distance Y corresponde environ à la moitié de la longueur C-M. La distance C-M est par exemple de l'ordre de 40mm, avec M habituellement fixé à environ 2mm.

Il est par ailleurs noté que lorsque l'entretoise 62 est fixée à la paroi 60, comme sur la figure 5, le respect de la distance Y conduit non seulement à placer chaque vanne 48 en position de fermeture, mais conduit également à placer la tige de piston 68 en position rentrée, dans laquelle la marge M précitée est observée.

Bien entendu, diverses modifications peuvent être apportées par l'homme du métier à l'invention qui vient d'être décrite, uniquement à titre d'exemples non limitatifs.

**Revendications**

1. Procédé de montage d'un vérin de commande (62) d'au moins une vanne de décharge d'air (48) placée entre un compresseur basse pression et un compresseur haute pression d'une turbomachine, ledit vérin comprenant d'une part un cylindre (66) destiné à être fixé sur une paroi de carter (60) de laquelle fait saillie une extrémité (74) d'un mécanisme de transmission relié à ladite vanne de décharge d'air, ledit cylindre étant prolongé par une entretoise (64) servant à sa fixation sur ladite paroi de carter, et comportant d'autre part une tige de piston (68) entourée par ladite entretoise (64) et destinée à être raccordée à ladite extrémité (74) du mécanisme de transmission, le procédé étant **caractérisé en ce qu'**il comprend les étapes successives suivantes :

   - sortie de la tige de piston (68) de manière à ce qu'elle fasse saillie de l'entretoise (64) ; fabriquée de manière à ne présenter aucune ouverture latérale.
   - raccordement de la tige de piston en saillie (68) à l'extrémité (74) du mécanisme de transmission faisant saillie de la paroi de carter (60) du côté du vérin (62) ;
   - rentrée de la tige de piston (68) de manière à rapprocher le cylindre (66) de ladite paroi de carter (60) ; l'étape de rentrée de la tige de piston (68) étant mise en oeuvre de sorte que la jonction mécanique (78) entre la tige de piston et l'extrémité du mécanisme de transmission se situe, à la fin de cette étape, à l'intérieur de ladite entretoise (64) ;
   - fixation de l'entretoise (64) sur la paroi de carter (60);
   - le procédé comprenant une étape préalable de dimensionnement du vérin, respectant la condition suivante : (C-M)/2 = Y ; avec « C » correspondant à la course maximale théorique du piston : « M » correspondant à la marge de butée mécanique en position rentrée de la tige ; « Y » correspondant à la distance entre la paroi et le centre de la jonction mécanique entre la tige de piston et l'extrémité, avec le centre de la jonction mécanique agencé dans l'entretoise fixée sur la paroi, et amenant d'une part chaque vanne en position de fermeture et amenant d'autre part la tige de piston en position rentrée.

2. Procédé de montage selon la revendication 1, **caractérisé en ce que** l'étape de fixation de l'entretoise (64) sur la paroi de carter (60) s'effectue par vissage.

3. Procédé de montage selon l'une quelconque des revendications précédentes, **caractérisé en ce que** l'étape de sortie de la tige de piston (68) est réalisée de sorte que dans une position du vérin permettant le raccordement de sa tige de piston sur l'extrémité (74) du mécanisme de transmission, la paroi de carter (60) et l'entretoise (64) définissent entre elles un accès (84) permettant le passage des doigts d'un opérateur.

4. Procédé de montage selon l'une quelconque des revendications précédentes, **caractérisé en ce que** l'entretoise (64) est fabriquée d'une seule pièce avec le cylindre (66) du vérin.

5. Procédé de montage selon l'une quelconque des revendications précédentes, **caractérisé en ce que** l'étape de raccordement de la tige de piston en saillie (68) à l'extrémité (74) du mécanisme de transmission s'effectue à l'aide d'une liaison rotulée (78) ou d'une liaison articulée.

6. Procédé de montage selon la revendication précédente, **caractérisé en ce que** la distance « C-M » est environ égale à 40mm.

**Patentansprüche**

1. Verfahren zur Montage eines Aktuators (62) für mindestens ein Luftauslassventil (48), das zwischen einem Niederdruckkompressor und einem Hochdruckkompressor eines Turbinenmotors angeordnet ist, wobei der Aktuator einerseits einen Zylinder (66) umfasst, der zur Befestigung an einer Gehäusewand (60) vorgesehen ist, von welcher ein Ende (74) eines mit dem Luftauslassventil verbundenen Übertragungsmechanismus hervorsteht, wobei der Zylinder durch einen Abstandshalter (64) verlängert ist, welcher zu seiner Befestigung an der Gehäusewand dient, und andererseits eine Kolbenstange (68) aufweist, die von dem Abstandshalter (64) umgeben ist und dazu vorgesehen ist, an das Ende (74) des Übertragungsmechanismus angeschlossen zu werden, wobei das Verfahren **dadurch gekennzeichnet ist, dass** es die nachfolgenden Schritte umfasst:

   - Austreten der Kolbenstange (68) derart, dass diese aus dem Abstandshalter (64) hervorsteht, welcher derart gefertigt ist, dass er keine seitliche Öffnung aufweist;
- Anschließen der hervorstehenden Kolbenstange (68) an das Ende (74) des Übertragungsmechanismus, das aus der Gehäusewand (60) auf der Seite des Aktuators (62) hervorsteht;
- Einfahren der Kolbenstange (68) derart, dass sie den Zylinder (66) an die Gehäusewand (60) annähert; wobei der Schritt des Einfahrens der Kolbenstange (68) derart durchgeführt wird, dass die mechanische Verbindung (78) zwischen der Kolbenstange und dem Ende des Übertragungsmechanismus am Ende dieses Schrittes im Inneren des Abstandshalters (64) liegt;
- Befestigung des Abstandshalters (64) an der Gehäusewand (60);

wobei das Verfahren einen vorhergehenden Schritt der Bemessung des Aktuators umfasst, der die folgende Bedingung erfüllt: (C-M)/2 = Y; wobei "C" dem maximalen theoretischen Verlauf des Kolbens entspricht; "M" dem mechanischen Anschlagsbereich in der eingefahrenen Position der Stange entspricht; "Y" dem Abstand zwischen der Wand und dem Mittelpunkt der mechanischen Verbindung zwischen der Kolbenstange und dem Ende entspricht, wobei der Mittelpunkt der mechanischen Verbindung in dem an der Wand befestigten Abstandshalter angeordnet ist und einerseits jedes Ventil in Schließposition bringt und andererseits die Kolbenstange in die eingefahrene Position bringt.

2. Verfahren zur Montage nach Anspruch 1, **dadurch gekennzeichnet, dass** der Schritt der Befestigung des Abstandshalters (64) an der Gehäusewand (60) durch Verschraubung erfolgt.

3. Verfahren zur Montage nach einem der vorhergehenden Ansprüche, **dadurch gekennzeichnet, dass** der Schritt des Austretens der Kolbenstange (68) derart verwirklicht wird, dass in einer Position des Aktuators, welche den Anschluss seines Hubkolbens (74) an das Ende (74) des Übertragungsmechanismus ermöglicht, die Gehäusewand (60) und der Abstandshalter (64) zwischen sich einen Zugang (84) definieren, der den Durchlass der Finger einer Bedienperson ermöglicht.

4. Verfahren zur Montage nach einem der vorhergehenden Ansprüche, **dadurch gekennzeichnet, dass** der Abstandshalter (64) einstückig mit dem Zylinder (66) des Aktuators gefertigt ist.

5. Verfahren zur Montage nach einem der vorhergehenden Ansprüche, **dadurch gekennzeichnet, dass** der Schritt des Anschließens der hervorstehenden Kolbenstange (68) an das Ende (74) des Übertragungsmechanismus mit Hilfe einer Kugelverbindung (78) oder einer Gelenkverbindung erfolgt.

6. Verfahren zur Montage nach dem vorhergehenden Anspruch, **dadurch gekennzeichnet, dass** der Abstand "C-M" ungefähr gleich 40 mm beträgt.

**Claims**

1. Method for assembling an actuator (62) of at least one air bleed valve (48) placed between a low-pressure compressor and a high-pressure compressor of a turbine engine, said actuator comprising on the one hand a cylinder (66) intended to be attached to a casing wall (60) beyond which one end (74) of a transmission mechanism connected to said air bleed valve is projecting, said cylinder being extended by a spacer (64) for the attachment thereof to said casing wall, and further comprising a piston rod (68) surrounded by said spacer (64) and intended to be connected to said end (74) of the transmission mechanism, the method being **characterised in that** it comprises the successive steps of:

   - withdrawing the piston rod (68) such that it projects beyond the spacer (64), which is manufactured such that it does not have any lateral openings;
   - connecting the projecting piston rod (68) to the end (74) of the transmission mechanism projecting beyond the casing wall (60) on the side nearest the actuator (62);
   - causing the piston rod (68) to retract so as to bring the cylinder (66) closer to said casing wall (60), the step of causing the piston rod (68) to retract being implemented such that the mechanical junction (78) between the piston rod and the end of the transmission mechanism is situated, at the end of this step, inside said spacer (64);
   - attaching the spacer (64) to the casing wall (60);
   - the method comprising a prior step of scaling the actuator, in accordance with the following condition: (C-M)/2=Y; where "C" corresponds to the maximum theoretical stroke of the piston; "M" corresponds to the mechanical stop margin in the retracted position of the rod; "Y" corresponds to the distance between the wall and the centre of the mechanical junction between the piston rod and the end, whereby the centre of the mechanical junction is arranged in the spacer fixed to the wall and, on the one hand, bringing each valve into the closed position and, on the other hand, bringing the piston rod into the retracted position.

2. Assembly method according to claim 1, **characterised in that** the step of attaching the spacer (64) to the casing wall (60) is carried out by screwing.

3. Assembly method according to any of the previous claims, **characterised in that** the step of withdrawing the piston rod (68) is carried out such that, in a position of the actuator allowing the connection of the piston rod thereof to the end (74) of the transmission mechanism, the casing wall (60) and the spacer (64) define therebetween an access (84) allowing for the passage of an operator's fingers.

4. Assembly method according to any of the previous claims, **characterised in that** the spacer (64) is made in one piece with the cylinder (66) of the actuator.

5. Assembly method according to any of the previous claims, **characterised in that** the step of attaching the projecting piston rod (68) to the end (74) of the transmission mechanism is carried out using a ball joint coupling (78) or an articulated coupling.

6. Assembly method according to the previous claim, **characterised in that** the distance "C-M" is equal to about 40 mm.

FIG. 1

FIG. 2

EP 2 855 876 B1

FIG. 3

FIG. 4a

FIG. 4b

FIG. 4C

FIG. 4d

FIG. 5

FIG. 6

**EP 2 855 876 B1**

**RÉFÉRENCES CITÉES DANS LA DESCRIPTION**

**Documents brevets cités dans la description**

- WO 2007116319 A